(19) Europäisches Patentamt
European Patent Office
Office européen des brevets

(11) **EP 3 433 215 B1**

(12) **FASCICULE DE BREVET EUROPEEN**

(45) Date de publication et mention
de la délivrance du brevet:
**12.02.2020 Bulletin 2020/07**

(21) Numéro de dépôt: **17714858.2**

(22) Date de dépôt: **14.03.2017**

(51) Int Cl.:
*C03C 25/14* (2018.01)   *C03C 25/34* (2006.01)
*B32B 5/26* (2006.01)   *B32B 5/02* (2006.01)
*B32B 7/04* (2019.01)   *B32B 7/10* (2006.01)
*B32B 27/12* (2006.01)   *B32B 27/30* (2006.01)
*B32B 27/36* (2006.01)   *B32B 27/42* (2006.01)
*B32B 19/06* (2006.01)   *F16L 59/02* (2006.01)

(86) Numéro de dépôt international:
**PCT/FR2017/050572**

(87) Numéro de publication internationale:
**WO 2017/162955 (28.09.2017 Gazette 2017/39)**

(54) **PROCEDE DE FABRICATION DE MATELAS DE LAINE MINERALE AUTOADHESIFS**

VERFAHREN ZUR HERSTELLUNG VON SELBSTKLEBENDEN STEINWOLLEKISSEN

METHOD FOR MANUFACTURING SELF-ADHESIVE MINERAL WOOL PADS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.03.2016 FR 1652569**

(43) Date de publication de la demande:
**30.01.2019 Bulletin 2019/05**

(73) Titulaire: **Saint-Gobain Isover
92400 Courbevoie (FR)**

(72) Inventeurs:
• **RUISI, Fabrice
71640 DRACY-LE-FORT (FR)**
• **HOFFMANN, Vincent
92800 PUTEAUX (FR)**
• **JANAS, Michel
84110 RASTEAU (FR)**

(74) Mandataire: **Saint-Gobain Recherche
Département Propriété Industrielle
39 Quai Lucien Lefranc
93300 Aubervilliers (FR)**

(56) Documents cités:
WO-A1-00/57101   WO-A1-03/012220
WO-A1-2006/061540   WO-A1-2014/090670

**Description**

La présente invention concerne des produits d'isolation autoadhésifs à base de laine minérale, ainsi qu'un procédé pour les fabriquer.

La fabrication de produits d'isolation à base de laine minérale comprend une étape de formage des fibres de verre ou de roche respectivement par centrifugation interne ou externe. A la sortie du dispositif de centrifugation les fibres très chaudes et encore plastiques sont étirées et emportées par un courant gazeux. Ensuite on pulvérise sur les fibres encore chaudes une composition d'encollage, également appelée liant. Les fibres encollées sont ensuite recueillies et plaquées sous forme d'un matelas sur un tapis de collecte, ou convoyeur, qui passe dans une étuve où le liant est séché et durci par chauffage à des températures d'environ 200 °C.

Le convoyeur est généralement un tapis métallique perméable aux gaz, par exemple une grille métallique. Un dispositif d'aspiration peut être prévu en dessous du convoyeur.

Du fait de ce mode de formation du matelas de fibres, les fibres n'ont pas une orientation aléatoire, mais une orientation préférentielle parallèle au plan général du produit plat formé. Les propriétés mécaniques du produit, telles que la résistance en traction ou la reprise en épaisseur après compression, dépendent essentiellement de la nature et de la quantité du liant organique durci qui lie les fibres entre elles. Pour des raisons évidentes de limitation des coûts et d'optimisation de la tenue au feu des produits, la teneur en liant organique est la plus faible possible, généralement de l'ordre de 3 - 7 % en poids. Les documents WO03012220-A1 et WO2014090670-A1 divulguent des produits isolants ayant deux couches de matériau isolant. Le document WO0057101-A1 divulgue un produit isolant ayant une couche isolant et une couche autoadhésif. Le document WO2006061540-A1 divulgue un matériau isolant ayant un voile de fibres organiques sans liant supplémentaire sur la surface.

Les produits d'isolation à base de laine minérale peuvent comporter en outre un surfaçage, typiquement du papier Kraft, un voile de verre, une feuille d'aluminium, collé sur une ou sur les deux faces du matelas de laine minérale. Le surfaçage est typiquement posé sur le matelas de fibres minérales encollées avant l'entrée dans l'étuve ou en sortie d'étuve pour les surfaçages ne résistant pas à la température, tels que le papier Kraft ou certains surfaçages colorés.

Lorsque la Demanderesse a tenté de rendre adhésive une des faces d'un tel produit d'isolation, par application d'une composition adhésive directement sur la surface du matelas de fibres ou sur un surfaçage de type papier ou voile de verre, elle a été confrontée au problème suivant : le produit, collé avec sa face adhésive sur un support vertical tel qu'un mur, ne restait pas en place. Le matelas de laine minérale se décrochait du mur et de la couche adhésive qui, elle, était toujours fermement attachée au support vertical. On pouvait constater une rupture cohésive au sein de la laine minérale entre les couches ou strates superficielles du matelas de fibres et la couche adhésive la plus proche du substrat, tandis que les couches ou strates du matelas situées au-delà tombaient sous l'effet de leur propre poids.

Plusieurs solutions avaient déjà été proposées pour remédier à ce manque de cohésion :

- enveloppement du matelas de fibres et utilisation de l'enveloppe comme élément de surfaçage rendu adhésif par application d'un dispositif auto-adhésif tel qu'un ruban adhésif ou film adhésif double-face ou colle ;

- découpe et disposition des fibres de laine minérale selon une orientation perpendiculaire au plan de la couche adhésive : les fibres sont ainsi ancrées en profondeur de l'épaisseur du matelas et ne s'arrachent pas facilement ; le produit ISOVER CLIMCOVER Lamella Fix de la Demanderesse peut être cité à titre d'exemple d'un tel produit

- maillage dans l'épaisseur du produit : un réseau de fils assure la liaison entre deux surfaçages ; le produit ISOVER CLIMAVER 504 de la Demanderesse, dans sa version auto-adhésivée, correspond à ce type de produit.

L'enveloppement présente l'inconvénient d'interdire la découpe du produit après fabrication. Les deux dernières solutions nécessitent des procédés industriels complexes et peuvent s'avérer impossibles à mettre en œuvre pour des produits épais.

Bien entendu, la Demanderesse aurait pu remédier au problème de l'arrachement des fibres superficielles en améliorant la résistance intrinsèque du matelas de laine minérale, c'est-à-dire en augmentant simplement la teneur en liant organique du produit jusqu'à ce que le réseau de fibres collées soit suffisamment solide. Dans le domaine des produits d'isolation à base de laine minérale, une telle pratique est toutefois insatisfaisante parce qu'elle nuirait aux propriétés mécaniques du produit, réduirait de manière indésirable la réaction au feu des produits et augmenterait les coûts de production.

La présente invention a donc pour but de proposer un procédé de fabrication de produits d'isolation à base de laine minérale dont au moins une face est autoadhésive et qui, lorsqu'on les colle sur un substrat (par exemple une paroi verticale ou un plafond) ne présentent pas une rupture cohésive sous l'effet de leur propre poids. Le problème du manque de cohésion constaté au niveau de la couche superficielle du matelas doit être surmonté *sans* que la teneur globale en liant du produit d'isolation soit augmentée de manière notable. Autrement dit, la teneur en liant du produit doit être sensiblement identique à celle des produits équivalents non adhésifs disponibles sur le marché, typiquement entre 1 et 10%, de préférence entre 2 et 7% en poids de liant sec par rapport au poids total du matelas.

Après de nombreux essais, la Demanderesse a mis au point un procédé relativement simple de fabrication de produits d'isolation, peu différent du procédé connu, qui permet de surmonter le problème de la rupture cohésive sans augmenter significativement la teneur globale en liant organique du produit d'isolation. Dans le procédé de la présente invention la solution au problème décrit ci-dessus consiste à augmenter la teneur en liant du matelas de fibres de verre uniquement dans la zone de fragilité constatée, c'est-à-dire la couche la plus proche de l'interfaçage. L'apport supplémentaire de liant organique renforce ainsi sélectivement la cohésion de la couche externe du matelas et empêche efficacement la rupture. La quantité de liant supplémentaire (appelée ci-après parfois « sur-encollage ») est toutefois suffisamment faible pour ne pas modifier la tenue au feu du produit.

Il existe plusieurs manières d'introduire un excès de liant organique uniquement dans la couche superficielle du matelas de laine minérale.

La première consiste à imbiber un produit d'interfaçage, tel qu'un voile de verre ou de fibres organiques à haute résistance thermique, avec une composition de liant et à poser ce voile imbibé de composition liquide sur le matelas de laine minérale avant l'entrée dans l'étuve, c'est-à-dire à un stade où le liant du matelas n'est pas encore polymérisé. L'excès de liant apporté par le voile s'écoulera, sous l'effet de la gravité, dans la couche de fibres immédiatement en contact avec l'interfaçage. Un excès de teneur en liant se forme localement pour venir renforcer les liaisons des couches à mettre en contact avec le dispositif auto-adhésif. Dans l'étuve, le liant additionnel durcit et, le cas échéant, réagit avec la composition de liant non encore durcie déjà sur les fibres et un lien suffisamment solide se forme.

Une autre manière d'introduire localement une quantité additionnelle de liant en surface du matelas est d'asperger de manière homogène le dessus du matelas de fibres avec une composition liquide de liant avant d'appliquer l'interfaçage et de cuire l'ensemble matelas/interfaçage dans l'étuve. Ces deux modes d'introduction de liant (application sur l'interfaçage, application sur le matelas) peuvent bien entendu être combinés.

La Demanderesse a constaté avec satisfaction et avec une certaine surprise qu'en procédant de la manière décrite ci-dessus, c'est-à-dire en apportant localement une quantité supplémentaire de liant, le produit d'isolation final autoadhésif présentait une cohésivité satisfaisante ; la zone de fragilité avait disparu et n'était pas simplement déplacée vers des profondeurs plus importantes du matelas, comme on aurait pu le penser *a priori.*

La présente invention a donc pour premier objet un procédé de fabrication de produits d'isolation autoadhésifs à base de laine minérale, ledit procédé comprenant, dans l'ordre, les étapes successives suivantes :

(a) le formage de fibres minérales par centrifugation de verre fondu ou de roche fondue,

(b) la pulvérisation sur les fibres minérales, immédiatement après leur formation, d'une première composition liquide de liant organique,

(c) la formation d'un matelas de fibres minérales enduites de la première composition liquide de liant organique, par dépôt sur un convoyeur,

(d) le recouvrement d'une face du matelas de fibres minérales par un voile de verre ou de fibres organiques à haute résistance thermique,

(e) le chauffage du matelas de fibres minérales, recouvert du voile de verre ou de fibres organiques à haute résistance thermique, dans une étuve pendant une durée et à une température suffisante pour durcir le liant organique,

ledit procédé étant caractérisé par le fait qu'on applique une deuxième composition liquide de liant organique sur le voile et/ou sur la face du matelas de fibres minérales destinée à venir au contact du voile, la deuxième composition liquide de liant organique contenant de préférence des composants capables de réagir avec les composants de la première composition liquide de liant organique, l'application de la deuxième composition liquide de liant étant réalisée après l'étape (c) de formation du matelas et avant l'étape (d) de recouvrement du matelas par le voile de verre.

Le liant organique utilisé pour lier entre elles les fibres minérales peut être n'importe quel système polymère réticulable connu utilisé à cet effet. On peut citer à titre d'exemple les résines à base de phénol et de formaldéhyde, les résines à base de phénol, urée et formaldéhyde, les résines à base de phénol, urée, amine et formaldéhyde, les polymères acryliques, les polyesters obtenus par polycondensations de monomères et/ou oligomères à fonctions acide et hydroxyle, par exemple de glucides et d'acide citrique, les produits résultant de la réaction de Maillard entre un sucre réducteur et une amine. On utilisera avantageusement des compositions de liant contenant une résine à base de phénol, amine et formaldéhyde, ayant une teneur réduite en formaldéhyde telles que décrites dans la demande WO 2008/043960.

La première composition liquide de liant organique, pulvérisée sur les fibres immédiatement après la sortie du dispositif de centrifugation et avant formation du matelas, n'est pas nécessairement identique à la deuxième composition liquide de liant organique appliquée localement sur une face du matelas et/ou sur le voile de verre. Il est toutefois essentiel que les composants réactifs des deux compositions soient compatibles entre eux pour produire une matrice polymère homogène ou mixte ou interpénétrée. De préférence les composants réactifs des deux compositions peuvent réagir ensemble et former des liaisons covalentes.

Dans un mode de réalisation préféré du procédé de l'invention la deuxième composition liquide de liant organique contient essentiellement les mêmes composants réactifs que la première composition liquide de liant organique. La deuxième composition liquide de liant peut toutefois être plus concentrée ou moins concentrée que la première. Elle peut en outre être exempte de certains adjuvants d'encollage, présents dans la première composition liquide de liant organique.

La première et la deuxième composition liquide de liant organique sont de préférence des compositions à base d'eau.

On peut en principe utiliser en tant qu'interfaçage n'importe quel voile de verre ou de fibres organiques à haute résistance thermique disponible sur le marché, compatible avec l'utilisation envisagée du produit fini. Il s'agit de préférence d'un voile de verre non-tissé ou d'un voile de fibres de polyester tel que décrit dans WO 2006/061540. On utilisera de préférence un voile de verre.

Avant d'être imbibé avec la deuxième composition liquide de liant organique, le voile de verre ou de fibres organiques à haute résistance thermique a avantageusement une masse surfacique comprise entre 20 et 100 g/m², de préférence entre 30 et 90 g/m² et en particulier entre 35 et 80 g/m².

Sa teneur en liant organique, avant surencollage, est de préférence comprise entre 10 et 25 %, de préférence entre 11 et 20 % en poids.

Dans un mode de réalisation préféré du procédé de la présente invention, la deuxième composition de liant est appliquée sur le voile de verre. Cette application peut se faire par exemple par pulvérisation de la deuxième composition de liant au moyen de buses, par immersion du voile dans la deuxième composition de liant, ou encore par enduction au moyen d'un « rouleau-lécheur » c'est-à-dire d'un cylindre en rotation qui est en contact à la fois avec la deuxième composition de liant et avec le voile de verre.

Ce troisième mode d'application est préféré car il permet à la fois un contrôle aisé de la quantité de composition transférée sur le voile et l'utilisation d'une deuxième composition de liant significativement plus visqueuse que la première.

La deuxième composition liquide de liant organique a avantageusement une teneur en matières sèches comprise entre 100 g/litre et 400 g/litre, de préférence entre 120 g/litre et 300 g/litre, en particulier entre 150 g/litre et 200 g/litre.

Elle doit être, d'une part, suffisamment fluide pour s'écouler le long des fibres minérales dans la couche superficielle du matelas de fibres, et d'autre part assez visqueuse pour que l'augmentation de la cohésion due au sur-encollage soit suffisante.

La teneur en matières sèches et la quantité totale de deuxième composition liquide de liant organique, appliquée sur le voile de verre et/ou sur la face du matelas de fibres minérales destinée à venir au contact du voile de verre, sont telles que l'apport de matière sèche de liant organique est compris entre 2 g/m² et 50 g/m², de préférence entre 3 et 30 g/m², et en particulier entre 4 et 25 g/m² de produit fini.

Après mise en contact du voile de verre ou de fibres organiques à haute résistance thermique et du matelas de fibres minérales, le produit non encore durci est avantageusement soumis à l'action d'un flux d'air ou d'un convoyeur mobile verticalement appliquant une contrainte mécanique de compression. Ce flux d'air qui peut être créé par exemple par un système d'aspiration situé sous le convoyeur, favorise l'écoulement et l'étalement uniforme de la deuxième composition de liant dans la couche superficielle du matelas de fibres minérales.

L'étape de chauffage du matelas de fibres minérales, recouvert du voile, dans une étuve ne présente pas de particularité et peut être mise en œuvre de manière connue à une température comprise par exemple entre 180 °C et 240 °C, de préférence entre 200 °C et 220 °C pendant une durée comprise entre 30 secondes et 4 minutes.

La température et la durée de chauffage devront bien entendu être ajustées en fonction de la nature chimique du liant organique utilisé de manière à garantir un durcissement le plus complet possible tout en limitant une éventuelle dégradation thermique du liant durci.

Le produit d'isolation intermédiaire obtenu à la sortie de l'étuve est ensuite rendu autoadhésif. Pour cela, on applique sur la face exposée du voile de verre un « dispositif auto-adhésif ». Ce terme englobe tout moyen, fixé sur le voile de verre, permettant de coller par simple mise en contact le produit d'isolation sur un support, généralement un support plat.

Dans un mode de réalisation, le dispositif auto-adhésif est une feuille adhésive double-face, par exemple une structure à base de fibres (non-tissé ou papier) ou un film polymère, comportant sur chacune de ses faces une couche, continue ou discontinue, d'un adhésif sensible à la pression (PSA, de l'anglais *Pressure Sensitive Adhesive*).

Dans un autre mode de réalisation le dispositif autoadhésif est un adhésif sensible à la pression (PSA).

Les adhésifs sensibles à la pression (PSA) sont des adhésifs généralement présents sous forme d'une mince couche portée par un support. Ils collent presqu'immédiatement, par simple contact et application d'une pression, au matériau à coller. Bien qu'il existe certains PSA à très fort pouvoir adhésif, la très grande majorité des PSA sont considérés comme des adhésifs non-structuraux ou semi-structuraux, c'est-à-dire le collage est réversible. La température de transition vitreuse des PSA est toujours significativement inférieure à la température d'utilisation envisagée. A température ambiante, le réseau polymère formant la couche d'adhésif est donc un fluide viscoélastique, la grande mobilité des chaînes polymères étant en effet une condition indispensable à la formation d'une multitude de liaisons faibles (van der Waals et liaisons hydrogène) entre l'adhésif et la surface à coller.

Les PSA sont généralement caractérisés par leur pégosité (*tack*), leur résistance au pelage (*peel strength*) et leur résistance en cisaillement (*shear*

*strength*).

On distingue typiquement trois principales classes chimiques d'adhésifs sensibles à la pression :

- les PSA à base d'élastomères,
- les PSA acryliques et
- les PSA à base de silicone.

Les PSA utilisés dans la présente invention sont de préférence des PSA acryliques.

Dans un deuxième mode de réalisation du procédé de l'invention, un PSA est appliqué directement sur le voile de verre du produit d'isolation intermédiaire. Le procédé de fabrication selon l'invention comprend donc de préférence, après l'étape (e) de chauffage, une étape (f) d'application d'un adhésif sensible à la pression sur la face exposée du voile de verre. Ce PSA est de préférence un adhésif acrylique.

Cette étape comprend avantageusement la pulvérisation d'une solution ou dispersion aqueuse de l'adhésif et le séchage et/ou le durcissement de la couche d'adhésif déposée, éventuellement avec un apport d'énergie par chauffage et/ou irradiation.

La quantité de PSA, exprimée en matière sèche, appliquée sur la face exposée du voile de verre est avantageusement comprise entre 10 et 50 g/m², de préférence entre 12 et 40 g/m², en particulier entre 15 et 30 g/m².

Il est également envisageable d'appliquer le PSA sur le voile de verre par projection d'une poudre d'un PSA thermofusible et chauffage.

La couche de PSA appliquée sur la face exposée du voile de verre n'est pas nécessairement une couche continue. Il peut s'agir d'une couche discontinue formée d'une combinaison de zones adhésives, par exemple en forme de bandes ou d'ilots, et de zones non adhésives.

Une telle couche adhésive discontinue peut être déposée par exemple par impression d'une composition adhésive à base de PSA.

Un film polymère protecteur pelable peut ensuite être appliqué de manière connue sur la couche adhésive.

La présente invention a en outre pour objet un produit d'isolation autoadhésif à base de laine minérale obtenu par le procédé décrit ci-dessus.

Le produit d'isolation autoadhésif à base de laine minérale de la présente invention comprend

- un matelas de laine minérale formé de fibres minérales liées entre elles par un liant organique durci, insoluble, ce matelas de laine minérale pouvant être avec ou sans revêtement du côté opposé à l'auto-adhésivage,
- sur une des faces du matelas, un voile de verre ou de fibres organiques à haute résistance thermique lié au matelas par un liant organique durci, insoluble, et

- une couche d'un adhésif sensible à la pression (PSA) du côté de la face exposée du voile de verre,

et il est caractérisé par le fait que la teneur en liant organique dans la couche superficielle du matelas de laine minérale qui est en contact avec le voile de verre est significativement supérieure à la teneur en liant organique dans le reste du matelas de laine minérale.

On entend ici par « couche superficielle » une couche représentant environ 10 % en poids du matelas de laine minérale (sans le voile de verre), et par « le reste du matelas de laine minérale » la partie complémentaire jusqu'à 100 % en poids du matelas.

La teneur en liant organique du reste du matelas de laine minérale est due uniquement à la première composition liquide de liant. Elle est assimilée dans la présente demande à la teneur en matières combustibles déterminée conformément à la norme EN ISO 1887. Cette teneur en matières combustibles (*loss on ignition,* LOI) est en principe sensiblement la même dans toute l'épaisseur du matelas, à l'exception de la couche superficielle où l'on trouve également la teneur en liant organique due au sur-encollage, c'est-à-dire à l'apport de liant organique par la deuxième composition liquide de liant organique.

La différence entre la teneur en liant organique dans la couche superficielle ($LOI_{10}$) et la teneur en liant organique du reste du matelas ($LOI_{90}$) correspond à un apport de liant organique (Q) compris entre 2 g/m² et 50 g/m², de préférence entre 3 et 30 g/m², et idéalement entre 4 et 25 g/m² de produit d'isolation.

Le sur-encollage, ou apport de liant organique par la deuxième composition liquide de liant organique, peut être déterminé de la manière suivante :

- On découpe dans le produit fini un échantillon d'une surface (S) (au moins égal à 0,5 m²). On sépare le voile de verre collé du matelas de laine minérale à l'aide d'un outil coupant approprié en prenant soin de séparer le moins possible de fibres minérales du matelas.
- On détermine la masse totale ($M_T$) de l'échantillon de surface S, débarrassé du voile. Puis on sépare, à l'aide d'un outil coupant approprié, une couche superficielle (auparavant en contact avec le voile) correspondant à environ 10 % en poids de l'échantillon, du reste du matelas correspondant à environ 90 % en poids du matelas. On détermine précisément la masse ($M_{10}$) de la couche superficielle et celle du reste du matelas ($M_{90}$).

On détermine, conformément à la norme EN ISO 1887 : 2014, la teneur en matières combustibles ($LOI_{10}$ et $LOI_{90}$) des deux parties respectives de masse $M_{10}$ et $M_{90}$.

Du fait de l'apport de liant par la deuxième composition liquide de liant organique, le $LOI_{10}$ (exprimé en %) de la couche superficielle de masse $P_{10}$ (exprimée

en g) sera supérieur au $LOI_{90}$ (exprimé en %) du reste du matelas de masse $P_{90}$ (exprimée en g).

Le sur-encollage, c'est-à-dire la quantité (Q) de liant apporté par la deuxième composition de liant organique (exprimée en g) peut être calculée de la manière suivante

$$Q = (LOI_{10}-LOI_{90}) \times M_{10}$$

Cette valeur peut ensuite être exprimée en g par unité de surface S (exprimée en $m^2$) de produit fini.

Bien que le procédé selon l'invention puisse servir en principe à fabriquer toute sorte de produits d'isolation autoadhésifs à base de laine minérale, le problème technique à la base de la présente invention se pose de manière plus cruciale pour les produits présentant à la fois une assez faible densité et une épaisseur importante. Les produits très denses et compacts, d'une part, et les produits très minces, d'autre part, sont peu susceptibles de présenter une rupture cohésive telle que décrite en introduction.

Les produits d'isolation autoadhésifs à base de laine minérale de la présente invention présentent par conséquent avantageusement une masse volumique déterminée conformément à la norme NF EN 823 comprise entre 10 $kg/m^3$ et 100 $kg/m^3$, de préférence entre 15 $kg/m^3$ et 80 $kg/m^3$, en particulier entre 20 $kg/m^3$ et 70 $kg/m^3$.

Leur épaisseur, déterminée conformément à la norme NF EN 823, est avantageusement comprise entre 15 mm et 200 mm, de préférence entre 30 mm et 150 mm, en particulier entre 50 mm et 120 mm.

## Revendications

1. Procédé de fabrication de produits d'isolation autoadhésifs à base de laine minérale, comprenant

   (a) le formage de fibres minérales par centrifugation de verre fondu ou de roche fondue,
   (b) la pulvérisation sur les fibres minérales, immédiatement après leur formation, d'une première composition liquide de liant organique,
   (c) la formation d'un matelas de fibres minérales enduites de la première composition liquide de liant organique, par dépôt sur un convoyeur,
   (d) le recouvrement d'une face du matelas de fibres minérales par un voile de verre ou de fibres organiques à haute résistance thermique,
   (e) le chauffage du matelas de fibres minérales, recouvert du voile de verre, dans une étuve pendant une durée et à une température suffisante pour durcir le liant organique,
   (f) l'application sur la face exposée du voile de verre d'un dispositif auto-adhésif,

   **caractérisé par le fait que** - après l'étape (c) et avant l'étape (d) - on applique une deuxième composition liquide de liant organique sur le voile de verre et/ou sur la face du matelas de fibres minérales destinée à venir au contact du voile de verre, la deuxième composition liquide de liant organique contenant de préférence des composants capables de réagir avec les composants de la première composition liquide de liant organique, et **par le fait que** la teneur en matières sèches et la quantité totale de deuxième composition liquide de liant organique, appliquée sur le voile de verre et/ou sur la face du matelas de fibres minérales destinée à venir au contact du voile de verre, sont telles que l'apport de matière sèche de liant organique est compris entre 2 $g/m^2$ et 50 $g/m^2$ de produit d'isolation.

2. Procédé selon la revendication 1, **caractérisé par le fait que** la deuxième composition liquide de liant organique contient essentiellement les mêmes composants réactifs que la première composition liquide de liant organique.

3. Procédé selon la revendication 1 ou 2, **caractérisé par le fait qu'**il comprend, après l'étape (e) de chauffage, une étape (f) d'application d'un adhésif sensible à la pression (PSA) sur la face exposée du voile de verre.

4. Procédé selon la revendication 3, **caractérisé par le fait que** le PSA est un adhésif acrylique.

5. Procédé selon la revendication 2 à 4, **caractérisé par le fait que** le PSA est appliqué sur la face exposée du voile de verre en une quantité comprise entre 10 et 50 $g/m^2$, de préférence entre 12 et 40 $g/m^2$, en particulier entre 15 et 30 $g/m^2$.

6. Procédé selon l'une quelconque des revendications précédentes, **caractérisé par le fait que** le voile de verre présente, avant application de la deuxième composition liquide de liant organique, une masse surfacique comprise entre 20 et 100 $g/m^2$, de préférence entre 30 et 90 $g/m^2$ et en particulier entre 35 et 80 $g/m^2$.

7. Procédé selon l'une quelconque des revendications précédentes, **caractérisé par le fait que** la deuxième composition liquide de liant organique a une teneur en matières sèches comprise entre 100 g/litre et 400 g/litre.

8. Procédé selon l'une quelconque des revendications précédentes, **caractérisé par** le fait la teneur en matières sèches et la quantité totale de deuxième composition liquide de liant organique, appliquée sur le voile de verre et/ou sur la face du matelas de fibres minérales destinée à venir au contact du voile de verre, sont telles que l'apport de matière sèche de liant organique est compris entre 3 g/m² et 30 g/m² de produit d'isolation.

9. Produit d'isolation autoadhésif à base de laine minérale comprenant

    - un matelas de laine minérale formé de fibres minérales liées entre elles par un liant organique durci, insoluble,
    - sur une des faces du matelas, un voile de verre ou de fibres organiques à haute résistance thermique, lié au matelas par un liant organique durci, insoluble, et
    - une couche d'un adhésif sensible à la pression sur la face exposée du voile de verre,

la teneur en liant organique dans la couche superficielle du matelas de laine minérale qui est en contact avec le voile de verre ou de fibres organiques à haute résistance thermique étant significativement supérieure à la teneur en liant organique dans le reste du matelas de laine minérale, la différence entre la teneur en liant organique dans la couche superficielle ($LOI_{10}$) et la teneur en liant organique du reste du matelas ($LOI_{90}$) correspondant à un apport de liant organique (Q) compris entre 2 g/m² et 50 g/m² de produit d'isolation.

10. Produit d'isolation autoadhésif selon la revendication 9, **caractérisé par le fait qu'**il présente une masse volumique comprise entre 10 kg/m³ et 100 kg/m³, de préférence entre 15 kg/m³ et 80 kg/m³, en particulier entre 20 kg/m³ et 70 kg/m³.

**Patentansprüche**

1. Verfahren zur Herstellung selbstklebender Dämmstoffe auf Basis von Mineralwolle, das Folgendes umfasst

    (a) das Bilden von Mineralfasern durch Zentrifugieren geschmolzenen Glases oder geschmolzenen Gesteins,
    (b) das Sprühen, auf die Mineralfasern unmittelbar nach ihrem Bilden, einer ersten flüssigen organischen Bindemittelzusammensetzung,
    (c) das Bilden einer Lage aus Mineralfasern, die mit der ersten flüssigen organischen Bindemittelzusammensetzung beschichtet sind, durch Ablegen auf einem Förderband,
    (d) das Bedecken einer Fläche der Lage aus Mineralfasern mit einem Vlies aus Glasfasern oder aus organischen Fasern mit hoher Wärmebeständigkeit,
    (e) das Erhitzen der mit dem Glasvlies bedeckten Mineralfaserlage in einem Wärmeschrank während einer Dauer und bei einer Temperatur, die ausreichen, um das organische Bindemittel auszuhärten,
    (f) das Aufbringen, auf die freiliegende Fläche des Glasvlieses, einer selbstklebenden Vorrichtung,

**dadurch gekennzeichnet, dass** - nach dem Schritt (c) und vor dem Schritt (d) - eine zweite flüssige organische Bindemittelzusammensetzung auf das Glasfaservlies und/oder auf die Fläche der Mineralfaserlage aufgebracht wird, die bestimmt ist, mit dem Glasvlies in Kontakt zu kommen, wobei die zweite flüssige organische Bindemittelzusammensetzung vorzugsweise Bestandteile enthält, die imstande sind, mit den Bestandteilen der ersten flüssigen organischen Bindemittelzusammensetzung zu reagieren, und dadurch, dass der Trockenmassegehalt und die Gesamtmenge an zweiter flüssiger organischer Bindemittelzusammensetzung, die auf das Glasvlies und/oder auf der Fläche des Mineralfaserkissens aufgebracht wird, die dazu bestimmt ist, mit dem Glasvlies in Kontakt zu kommen, derart sind, dass die Einbringung von Trockenmasse aus organischem Bindemittel zwischen 2 g/m² und 50 g/m² Dämmstoff liegt.

2. Verfahren nach Anspruch 1, **dadurch gekennzeichnet, dass** die zweite flüssige organische Bindemittelzusammensetzung im Wesentlichen dieselben reaktiven Bestandteile wie die erste flüssige organische Bindemittelzusammensetzung enthält.

3. Verfahren nach Anspruch 1 oder 2, **dadurch gekennzeichnet, dass** es nach dem Schritt (e) des Erwärmens einen Schritt (f) des Aufbringens eines druckempfindlichen Haftmittels (PSA) auf der freiliegenden Fläche des Glasfaservlieses umfasst.

4. Verfahren nach Anspruch 3, **dadurch gekennzeichnet, dass** das PSA ein Acrylhaftmittel ist.

5. Verfahren nach Anspruch 2 bis 4, **dadurch gekennzeichnet, dass** das PSA auf die freiliegende Fläche des Glasfaservlieses in einer Menge aufgebracht wird, die zwischen 10 und 50 g/m², vorzugsweise zwischen 12 und 40 g/m², insbesondere zwischen 15 und 30 g/m² liegt.

6. Verfahren nach einem der vorstehenden Ansprüche, **dadurch gekennzeichnet, dass** das Glasfaservlies vor dem Aufbringen der zweiten flüssigen organischen Bindemittelzusammensetzung ein Flächengewicht aufweist, das zwischen 20 und 100 g/m², vorzugsweise zwischen 30 und 90 g/m² und insbesondere zwischen 35 und 80 g/m² liegt.

7. Verfahren nach einem der vorstehenden Ansprüche, **dadurch gekennzeichnet, dass** die zweite flüssige organische Bindemittelzusammensetzung einen Trockenmassegehalt aufweist, der zwischen 100 g/Liter und 400 g/Liter liegt.

8. Verfahren nach einem der vorstehenden Ansprüche, **dadurch gekennzeichnet, dass** der Trockenmassegehalt und die Gesamtmenge der zweiten flüssigen organischen Bindemittelzusammensetzung, die auf das Glasvlies und/oder auf die Fläche des Mineralfaserkissens aufgebracht wird, die dazu bestimmt ist, mit dem Glasvlies in Kontakt zu kommen, derart sind, dass die Einbringung von Trockenmasse aus organischem Bindemittel zwischen 3 g/m$^2$ und 30 g/m$^2$ Dämmstoff liegt.

9. Selbstklebender Dämmstoff auf Basis von Mineralwolle, der Folgendes umfasst

   - eine Lage aus Mineralwolle, die aus durch ein gehärtetes, unlösliches organisches Bindemittel miteinander verbundene Mineralfasern, gebildet ist,
   - auf einer der Flächen der Lage, ein Vlies aus Glasfasern oder aus organischen Fasern mit hoher Wärmebeständigkeit, das durch ein gehärtetes, unlösliches organisches Bindemittel mit der Lage verbunden ist, und
   - eine Schicht aus einem druckempfindlichen Haftmittel auf der freiliegenden Fläche des Glasvlieses,

   wobei der Gehalt an organischem Bindemittel in der oberflächlichen Schicht der Lage aus Mineralwolle, die mit dem Vlies aus Glasfasern oder aus organischen Fasern mit hoher Wärmebeständigkeit in Kontakt ist, signifikant höher ist als der Gehalt an organischem Bindemittel in der übrigen Mineralwollelage, wobei die Differenz zwischen dem Gehalt an organischem Bindemittel in der oberflächlichen Schicht (LOI$_{10}$) und dem Gehalt an organischem Bindemittel in der übrigen Lage (LOI$_{90}$) einer Einbringung von organischem Bindemittel (Q) entspricht, die zwischen 2 g/m$^2$ und 50 g/m$^2$ Dämmstoff liegt.

10. Selbstklebender Dämmstoff nach Anspruch 9, **dadurch gekennzeichnet, dass** er eine volumenbezogene Masse aufweist, die zwischen 10 kg/m$^3$ und 100 kg/m$^3$, vorzugsweise zwischen 15 kg/m$^3$ und 80 kg/m$^3$, insbesondere zwischen 20 kg/m$^3$ und 70 kg/m$^3$ liegt.

**Claims**

1. A process for the manufacture of self-adhesive insulation products based on mineral wool, comprising:

   (a) the forming of mineral fibers by centrifugation of molten glass or molten rock,
   (b) the spraying, over the mineral fibers, immediately after they have been formed, of a first liquid organic binder composition,
   (c) the formation of a blanket of mineral fibers which are coated with the first liquid organic binder composition, by deposition on a conveyor,
   (d) the covering of a face of the blanket of mineral fibers with a surfacing mat of glass fibers or of organic fibers having high heat resistance,
   (e) the heating of the blanket of mineral fibers, covered with the surfacing mat, in a drying oven for a period of time and at a temperature sufficient to cure the organic binder,
   (f) the application, to the exposed face of the surfacing mat, of a self-adhesive material,

   **characterized in that** - after stage (c) and before stage (d) - a second liquid organic binder composition is applied to the surfacing mat and/or to the face of the blanket of mineral fibers which is intended to come into contact with the surfacing mat, the second liquid organic binder composition preferably containing components capable of reacting with the components of the first liquid organic binder composition, and by the fact that the solids content of the second liquid organic binder composition and its total amount applied to the surfacing mat and/or to the face of the blanket of mineral fibers which is intended to come into contact with the surfacing mat, are such that the applied amount of organic binder solids is between 2 g/m$^2$ and 50 g/m$^2$ of insulation product.

2. The process as claimed in claim 1, **characterized in that** the second liquid organic binder composition essentially contains the same reactive components as the first liquid organic binder composition.

3. The process as claimed in claim 1 or 2, **characterized in that** it comprises, after the heating stage (e), a stage (f) of application of a pressure-sensitive adhesive (PSA) to the exposed face of the surfacing mat.

4. The process as claimed in claim 3, **characterized in that** the PSA is an acrylic adhesive.

5. The process as claimed in claim 2 to 4, **characterized in that** the PSA is applied to the exposed face of the surfacing mat in an amount of between 10 and 50 g/m$^2$, preferably between 12 and 40 g/m$^2$, in particular between 15 and 30 g/m$^2$.

6. The process as claimed in any one of the preceding claims, **characterized in that** the surfacing mat exhibits, before application of the second liquid organic binder composition, a weight per unit area of between 20 and 100 g/m², preferably between 30 and 90 g/m² and in particular between 35 and 80 g/m².

7. The process as claimed in any one of the preceding claims, **characterized in that** the second liquid organic binder composition has a solids content of between 100 g/liter and 400 g/liter.

8. The process as claimed in any one of the preceding claims, **characterized in that** the solids content of the second liquid organic binder composition and its total amount applied to the surfacing mat and/or to the face of the blanket of mineral fibers which is intended to come into contact with the surfacing mat, are such that the amount of applied organic binder solids is between 3 g/m² and 30 g/m² of insulation product.

9. A self-adhesive insulation product based on mineral wool, comprising:

   - a blanket of mineral wool formed of mineral fibers bonded together by an insoluble cured organic binder,
   - on one of the faces of the blanket, a surfacing mat of glass fibers or of organic fibers having high heat resistance which is bonded to the blanket by an insoluble cured organic binder, and
   - a layer of a pressure-sensitive adhesive on the exposed face of the surfacing mat,

   the content of organic binder in the surface layer of the mineral wool blanket which is in contact with the surfacing mat of glass fibers or of organic fibers having high heat resistance being significantly greater than the content of organic binder in the remainder of the mineral wool blanket, the difference between the content of organic binder in the surface layer ($LOI_{10}$) and the organic binder content of the remainder of the blanket ($LOI_{90}$) corresponds to an applied amount of organic binder (Q) of between 2 g/m² and 50 g/m² of insulation product.

10. The self-adhesive insulation product as claimed in claim 9, **characterized in that** it exhibits a density of between 10 kg/m³ and 100 kg/m³, preferably between 15 kg/m³ and 80 kg/m³, in particular between 20 kg/m³ and 70 kg/m³.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03012220 A1
- WO 2014090670 A1
- WO 0057101 A1
- WO 2006061540 A
- WO 2008043960 A